# EUROPÄISCHE PATENTANMELDUNG

(11) **EP 0 796 789 A1**
(43) Veröffentlichungstag der Anmeldung: **24.09.1997**
(21) Anmeldenummer: 96104412.0
(22) Anmeldetag: 20.03.1996
(51) Int. Cl.: B65B 9/13, B65B 51/30, B65B 51/32

(54) **Verfahren und Vorrichtung zum Herstellen von aus Kunststofffolie bestehenden Folienhauben für Verpackungszwecke**

(71) Anmelder: Bernhard Beumer Maschinenfabrik KG, D-59269 Beckum (DE)
(72) Erfinder: van Essen, Josef, D-48324 Sendenhorst (DE)
(74) Vertreter: Hoormann, Walter, Dr.-Ing.

(57) **Zusammenfassung**

Die Erfindung betrifft ein Verfahren zum Herstellen von Hauben aus einem aus Kunststoffolie bestehenden Schlauch, bei dem der im wesentlichen vertikal angeordnete Schlauch mit Abstand zu seinem freien Ende mit einer Querschweißnaht versehen und der mit der Querschweißnaht von dem Schlauch abgetrennt wird, wobei der beim Schweißvorgang an der Schweißstelle eingeklemmte Schlauch vor dem Schweißen bis nach dem Abtrennen außerdem oberhalb und benachbart zu der Abtrennlinie über seine Breite eingeklemmt wird, wobei der Schlauch vor dem Schweißen bis nach dem Abtrennen zusätzlich unterhalb und benachbart zu der Schweißstelle über seine Breite eingeklemmt wird. Die Erfindung betrifft weiterhin eine Einrichtung zur Durchführung dieses Verfahrens mit einer Schweißeinrichtung zum Legen einer Querschweißnaht, einer oberhalb der Schweißeinrichtung angeordneten Schneideinrichtung und einer oberhalb der Schneideinrichtung angeordneten Klemmeinrichtung, wobei unterhalb und benachbart zu den Schweißleisten eine zweite Klemmeinrichtung angeordnet ist, mittels welcher der Schlauch im wesentlichen über seine Breite zusätzlich einzuklemmen ist.

## Beschreibung

Die Erfindung betrifft ein verfahren zum Herstellen von Hauben aus einem aus Kunststoffolie bestehenden Sahlauch, insbesondere einem Seitenfaltenschlauch, zur Weiterverwendung in einer Verpackungsmaschine, bei dem der im wesentlichen vertikal angeordnete Schlauch mit Abstand zu seinem freien unteren Ende mit einer rechtwinklig zu seiner Längsrichtung verlaufenden Querschweißnaht versehen wird und der mit der Querschweißnaht versehene Abschnitt benachbart zu der Querschweißnaht von dem Sahlauch abgetrennt wird, wobei der beim Schweißvorgang an der Schweißstelle von der die Schweißung durchführenden Schweißeinrichtung eingeklemmte Schlauch vor dem Schweißen bis nach dem Abtrennen außerdem oberhalb und benachbart zu der Abtrennlinie über seine Breite eingeklemmt wird.

Die Erfindung betrifft weiterhin eine (Haubenbildungs-)Einrichtung zum Herstellen von Hauben aus einem aus Kunststoffolie bestehenden, mit zwei im wesentlichen parallel zueinander verlaufenden Wandungsabschnitten vertikal durch die Einrichtung geführten Schlauch, insbesondere einem Seitenfaltenschlauch, für eine Verpackungsmaschine zum jeweiligen Umhüllen von Stückgutstapeln mit einer Folienhaube, mit einer zwei parallele Schweißleisten aufweisenden, beheizbaren Schweißeinrichtung, mittels welcher der Schlauch mit Abstand zu seinem freien Ende mit einer rechtwinklig zur Schlauchlängsrichtung verlaufenden Querschweißnaht zu versehen ist, wobei die beiden in einer Ruhestellung mit gegenseitigem Abstand angeordneten Schweißleisten unter Einklemmung des Schlauches in eine Anlagestellung verfahrbar sind, mit einer oberhalb der Schweißeinrichtung angeordneten Schneideinrichtung, mittels welcher ein mit einer Querschweißnaht versehener Schlauchabschnitt benachbart zu der Querschweißnaht von dem Schlauch abzutrennen ist, und mit einer oberhalb der Schneideinrichtung angeordneten Klemmeinrichtung, mittels welcher der Schlauch benachbart zu der Abtrennlinie im wesentlichen über seine gesamte Breite einzuklemmen ist, zur Durchführung des vorgenannten Verfahrens.

Es sind verschiedene Verfahren und Vorrichtungen bekannt, mittels welcher beispielsweise aus gefüllten Säcken, Kästen o.dgl. bestehende, im allgemeinen quaderförmige Stückgutstapel ganz oder teilweise mit Kunststoffolie zu umhüllen sind, um ihnen eine für den Transport erforderliche hinreichende Stapelfestigkeit zu verleihen und sie vor Witterungseinflüssen zu schützen. Dabei ist u.a. bekannt, die Stückgutstapel jeweils mit einer Folienhaube zu überziehen, die aus sogenannter Schrumpffolie oder sogenannter Stretchfolie bestehen kann. Im erstgenannten Fall weist die Folienhaube einen etwas größeren Umfang als der jeweils zu umhüllende Stückgutstapel auf und wird nach dem Überziehen durch Wärmebeaufschlagung an den Stapel angeschrumpft. Bei der Verwendung von Stretchfolienmaterial weist die Haube einen geringeren Umfang als der jeweils zu umhüllende Stückgutstapel auf und wird vor dem Überziehen auf einen etwas größeren Umfang als der Stapelumfang gedehnt und legt sich nach dem Überziehen aufgrund der verbleibenden elastischen Dehnung fest an den Stückgutstapel an.

In beiden Fällen werden die Folienhauben aus Schlauchmaterial hergestellt, und zwar in aller Regel aus einem sogenannten Seitenfaltenschlauch, der im Bevorratungszustand flach zusammengefaltet ist, und zwar so, daß zwei V-förmige Falten zwischen zwei parallel zueinander verlaufenden Wandungsabschnitten liegen.

Zur Haubenbildung wird ein von dem im allgemeinen zu einer Rolle aufgehaspelten Schlauchvorrat abgewickelter Schlauchabschnitt zu einer im allgemeinen in eine Verpackungsmaschine integrierten Haubenbildungseinrichtung geführt und vertikal durch diese hindurchgeführt, damit die in dieser gefertigten Folienhauben jeweils sogleich weiterverwendet und unterhalb der Haubenbildungseinrichtung zweckmäßigerweise von oben nach unten über das zu umhüllende Stückgut gezogen werden können.

Die Fertigung der Folienhauben erfolgt dabei im wesentlichen so, daß der sich im wesentlichen vertikal durch die Haubenbildungseinrichtung erstreckende Schlauch mit einem der gewünschten Länge der zu bildenden Haube entsprechenden Abstand zu seinem freien Ende mit einer Querschweißnaht versehen und danach oberhalb der Querschweißnaht von dem Schlauchvorrat abgetrennt wird. Das Legen der Querschweißnaht erfolgt üblicherweise mit einer zwei parallele, beheizbare Schweißleisten aufweisenden Schweißeinrichtung, deren Schweißleisten unter gegenseitigem Andruck an die zu verschweißenden Folien gefahren und auf Schweißtemperatur erwärmt werden. Vor dem Abtrennen wird das freie Schlauchende zweckmäßigerweise bereits von Fingern, Greifern o.dgl. der Verpackungsmaschine aufgenommen, damit die fertige Haube zur Vermeidung unnötiger Totzeiten und damit letztlich zur Erzielung einer möglichst großen Verpackungsleistung sogleich weiterverarbeitet werden kann.

Insbesondere wenn die Haubenbildung einen Teil des gesamten Verpackungszykluses bildet, muß auch sie möglichst schnell durchführbar sein, weil sie anderenfalls die Verpackungsleistung der Gesamtmaschine nachteilig beeinflussen kann.

Eine Herstellung von Kunststoff-Folienhauben aus Schlauchmaterial ist deshalb problematisch, weil das Folienmaterial im Schweißnahtbereich beim Schweißvorgang so stark erwärmt werden muß, daß es einen zähflüssigen, teigigen Zustand annimmt, sodaß es zu Ein- oder Abrissen im Schweißnahtbereich kommen kann, wenn in diesem Zustand auch nur verhältnismäßig geringe Kräfte auf die Folie einwirken. Man muß daher mit dem Abtrennen des mit der Querschweißnaht versehenen Schlauchabschnittes von dem Schlauchvorrat so lange zuwarten, bis sich das Folienmaterial im Schweißnahtbereich wieder verfestigt hat, da es anderenfalls beim Abtrennen aufgrund der hierbei auf die Folie ausgeübten Kräfte selbst dann zu Beschädigungen der Schweißnaht kommen kann, wenn sie dabei noch in der Schweißeinrichtung eingeklemmt ist. Da sich gezeigt hat, daß es zur Schaffung einer sauberen, parallel zur Querschweißnaht verlaufenden Trennlinie vorteilhaft ist, wenn der Folienschlauch beim Abtrennen beiderseits benachbart zu der vorgesehenen Abtrennlinie eingespannt (eingeklemmt) ist, und daß dabei die beim Abtrennen auf den Schweißnahtbereich ausgeübten Kräfte auch kleiner sind als dann, wenn der Folienschlauch beim Abtrennen lediglich in der Schweißeinrichtung eingeklemmt ist, hat man auch bereits eine Haubenbildungseinrichtung geschaffen, bei welcher oberhalb der Schneideinrichtung eine entsprechende Klemmeinrichtung vorhanden ist, mittels welcher der Schlauch beim Abtrennen außerdem einzuklemmen ist. Dennoch kann es auch bei dieser Arbeitsweise noch zu Fehlstellen im Schweißnahtbereich kommen, wenn bis zum Abtrennen nicht so lange zugewartet wird, bis sich die von der Schweißeinrichtung eingeklemmte Schweißnaht so weit abgekühlt hat, daß sie wieder einen festen Zustand angenommen hat. Aber selbst wenn man diese relativ lange Abkühlzeit - und damit einen entsprechend geringeren Durchsatz - in Kauf nimmt, kann es zu Folienschädigungen im Schweißnahtbereich kommen. Dieses beruht vermutlich u.a. darauf, daß der sich von der Schweißnaht nach unten erstreckende Schlauchabschnitt aufgrund seines Gewichtes selbst dann Zugkräfte auf den Schweißnahtbereich ausüben kann, wenn er an seinem unteren Endabschnitt bereits von Fingern, Bügeln, Greifern o.dgl. aufgenommen ist, und daß diese Kräfte insbesondere bei größeren zu bildenden Hauben ausreichen, um unmittelbar benachbart zu der erhitzten Einspannstelle der Schweißeinrichtung nachteilige Wirkungen auf die Folie auszuüben. Die wesentliche Ursache für derartige Schädigungen dürfte darin bestehen, daß die Dicke der Schweißnaht erheblich kleiner als die Summe der Dicke der miteinander zu verschweißenden Folienlagen wird, wenn die unter gegenseitigem Andruck stehenden Schweißleisten den auf Schweißtemperatur erhitzten Schweißnahtbereich auch während dessen Abkühlphase eingeklemmt halten. Hierdurch wird die Schweißnaht nicht nur entsprechend dünn, sondern es ergeben sich an ihren Längsrändern, welche den Übergang zu dickeren Folienbereichen bilden, Kerbwirkungen, wenn es dort zu einer Beaufschlagung mit eingeprägten mechanischen Spannungen kommt.

Der vorliegenden Erfindung liegt die Aufgabe zugrunde, das Verfahren und die Einrichtung der eingangs beschriebenen Gattungen unter Vermeidung ihrer Nachteile insbesondere dahingehend zu verbessern, daß eine größere Durchsatzleistung zu erreichen ist, oh-ne daß es dabei zu Schädigungen im Schweißnahtbereich kommt. Vielmehr soll zugleich eine Möglichkeit dafür geschaffen werden, die Festigkeit der Schweißnaht zu verbessern.

Die Lösung des verfahrensmäßigen Teils dieser Aufgabe besteht er-findungsgemäß darin, daß der Schlauch vor dem Schweißen bis nach dem Abtrennen zusätzlich unterhalb und benachbart zu der Schweißstelle über seine Breite eingeklemmt wird. Hierdurch ist zunächst einmal sicherzustellen, daß die Schweißnaht in ihrem zähflüssigen, teigigen Zustand durch den von ihr nach unten hängenden Schlauchabschnitt nicht mehr negativ beeinflußt werden kann. Ein weiterer, ganz erheblicher Vorteil dieser Maßnahme besteht darin, daß die Abkühlzeit der Schweißnaht ganz erheblich vermindert und damit der Durchsatz erheblich erhöht werden kann, da die für das Abtrennen erforderliche bzw. höchst wünschenswerte Einspannung des Schlauches beiderseits der vorgesehenen Abtrennlinie nicht mehr wie bisher unter Verwendung der Schweißeinrichtung erfolgen muß, sondern völlig unabhängig hiervon erfolgen kann. Das Einklemmen des Schlauches an der Schweißstelle kann also erfindungsgemäß nach Bildung der Querschweißnaht unverzüglich aufgehoben werden, wobei der Schlauch ober- und unterhalb der Schweißnaht noch solange eingeklemmt bleibt, bis sich die Schweißnaht verfestigt hat. Wenn nun aber die Schweißnaht unmittelbar nach ihrer Bildung freigelegt wird, so kann sie ersichtlich erheblich schneller abkühlen. Dieses kann in Ausgestaltung der vorliegenden Erfindung noch dadurch verbessert werden, daß die Schweißnaht nach ihrer Bildung - vorzugsweise an ihren beiden Außenseiten - gekühlt wird, nämlich beispielsweise mit Luft angeblasen wird.

Die Lösung des vorrichtungsmäßigen Teils der obigen Aufgabe besteht erfindungsgemäß entsprechend darin, daß unterhalb der und benachbart zu den Schweißleisten eine zweite Klemmeinrichtung an-geordnet ist, mittels welcher der Schlauch im wesentlichen über seine gesamte Breite zusätzlich einzuklemmen ist. Höchst bevorzugt ist vorgesehen, daß die jeweils auf einer Schlauchseite angeordneten bzw. einer Schlauchseite zugeordneten Klemmittel der beiden Klemmeinrichtungen miteinander verbunden und mittels eines gemeinsamen Antriebes zwischen ihrer Öffnungsstellung und ihrer am Schlauch anliegenden Klemmstellung verfahrbar sind.

Eine besonders vorteilhafte Ausgestaltung besteht darin, daß die beiden Klemmeinrichtungen in Richtung ihrer Öffnungs- bzw. Schließbewegung relativ zu den Schweißleisten beweglich und unabhängig von diesen antreibbar sind. Hierdurch ist nicht nur zu erreichen, daß die Klemmeinrichtungen ggfs. bereits etwas früher mit dem Schlauch in klemmenden Eingriff kommen als die vorzugsweise bereits auf Schweißtemperatur vorgeheizten Schweißleisten, sondern vor allem auch, daß die Schweißleisten nach kurzzeitigem Kontakt mit der Folie sogleich wieder aus ihrer Anlagestellung in ihre Ruhestellung zurückgefahren werden können, während die Klemmeinrichtungen zunächst noch mit der Folie im Eingriff bleiben. Dadurch wird die Schweißnaht nach ihrer Bildung sogleich freigelegt und nicht mehr wie bisher von den sie (mit abgeschalteter Beheizung) einklemmenden Schweißleisten in ihrer Wärmeabgabe behindert (oder gar noch weiterhin mit Wärme beaufschlagt), kann also ihre Wärme unbehindert an die Umgebung abgeben und dabei ggfs. noch zusätzlich gekühlt werden. Da die Verfestigung der Schweißnaht dadurch erheblich rascher erfolgt und daher das Abtrennen entsprechend schneller durchgeführt werden kann, läßt sich ein entsprechend gesteigerter Durchsatz erzielen. Es kommt hinzu, daß die Schweißnaht nicht mehr wie bisher dünner als die Summe der Dicken der an ihr beteiligten Folienlagen wird, weil sie beim Abkühlen nicht mehr von den Schweißleisten eingeklemmt ist, sondern überraschenderweise sogar dicker als die Dickensumme der Folienlagen wird. Dieses beruht vermutlich darauf, daß nicht nur Schrumpffolie sondern auch Stretchfolie nach erheblicher Erwärmung ein Schrumpfverhalten zeigt, sich also bei Abkühlung in dem erwärmten Bereich zusammenzieht. Die Festigkeit der (abgekühlten) Schweißnaht wird daher entsprechend erhöht. Da der Übergang zu den benachbarten Folienbereichen stetig verläuft, entfallen auch die oben beschriebenen Kerbwirkungen.

Um auch die für den eigentlichen Schweißvorgang erforderliche Zeit reduzieren zu können, ist weiterhin vorgesehen, daß die Beheizung der Schweißeinrichtung bzw. deren Schweißleisten nicht (völlig) abgeschaltet wird, wenn sich die Schweißleisten in ihre Ruhestellung bewegen bzw. sich in dieser befinden, sondern während des Betriebes der Haubenbildungseinrichtung auf eine unterhalb der Schweißtemperatur liegende Ruhetemperatur erwärmt sind (z.B. 80 % der Schweißtemperatur), die es ermöglicht, daß die Schweißleisten die volle Schweißtemperatur bereits erreicht haben, wenn sie mit dem Schlauch in Eingriff kommen. Da die Schweißleisten dabei nicht wie bisher erst etwa von Umgebungstemperatur auf Schweißtemperatur aufgeheizt zu werden brauchen, läßt sich der eigentliche Schweißvorgang - abhängig von dem Folienmaterial, der Foliendicke und der Ausbildung der Schweißleisten - innerhalb von ca. 0,5 s. bis etwa 1,5 s. durchführen.

In Ausgestaltung der vorliegenden Erfindung kann eine Kühleinrichtung vorgesehen sein, mittels welcher die Schweißnaht - bevorzugt an ihren beiden Außenseiten - nach dem Öffnen der Schweißeinrichtung mit einem Kühlmittel zu beaufschlagen ist, um ihre Abkühlzeit weiter zu reduzieren, und den Abtrennvorgang nach der Schweißnahtbildung noch rascher durchführen zu können.

Weitere bevorzugte Ausgestaltungen der vorliegenden Erfindung sind in den Unteransprüchen beschrieben und werden nachstehend an Ausführungsbeispielen unter Bezugnahme auf eine Zeichnung erläutert. Es zeigt:
Fig. 1 eine schematische Teil-Seitenansicht auf die wesentlichen Elemente der erfindungsgemäßen Haubenbildungseinrichtung und einige Komponenten der zugeordneten Verpackungsmaschine in Richtung der Schnittlinie I-I in Fig. 2 gesehen;
Fig. 2 eine verkleinerte Draufsicht auf die Darstellung gem. Fig. 1 in Richtung der Schnittlinie II-II in Fig. 1 gesehen;
Fig. 3 eine vergrößerte Darstellung der Haubenbildungseinrichtung gem. den Fig. 1 und 2 im geöffneten Zustand;
Fig. 4 die (gegenüber Fig. 3 etwas verkleinerte) Darstellung gem. Fig. 3 mit geschlossenen Klemmeinrichtungen und noch geöffneter Schweißeinrichtung;
Fig. 5 eine Darstellung gem. Fig. 4 mit geschlossener Schweißeinrichtung;
Fig. 6 eine Darstellung gem. den Fig. 4 und 5 unmittelbar nach dem Bilden der Querschweißnaht, wobei die Schweißeinrichtung wieder geöffnet und eine Kühleinrichtung zum Abkühlen der Schweißnaht angedeutet ist;
Fig. 7 eine Variante der Haubenbildungseinrichtung mit nur einer relativ zu den geschlossenen Klemmeinrichtungen beweglichen und einer fest an diesen angeordneten Schweißleiste in einer Darstellung gem. Fig. 3;
Fig. 8 die Darstellung gem. Fig. 7 in geschlossenem Zustand der Klemmeinrichtungen und der Schweißeinrichtung; und
Fig. 9 eine Darstellung gem. Fig. 8 unmittelbar nach dem Bilden der Schweißnaht mit geschlossenen Klemmeinrichtungen und bereits geöffneter Schweißeinrichtung.

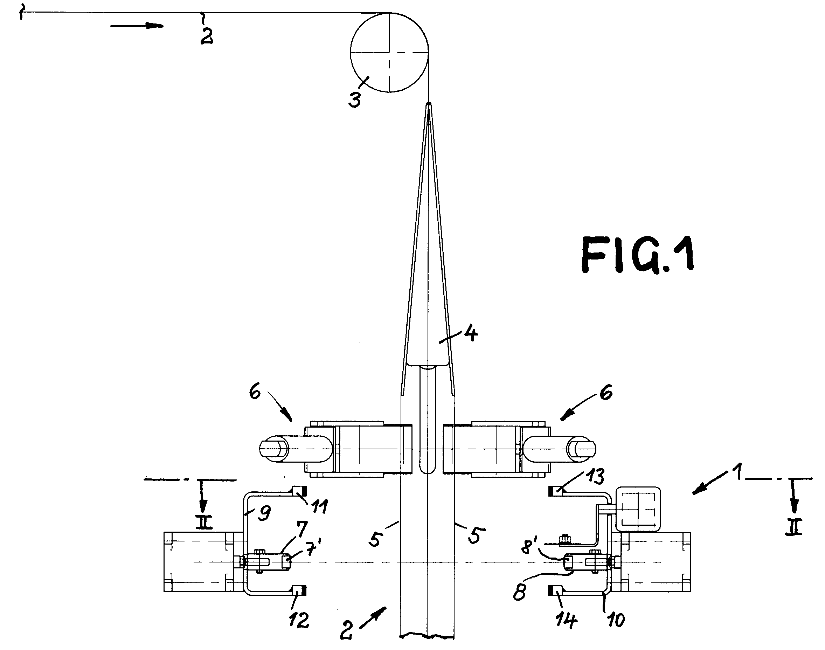

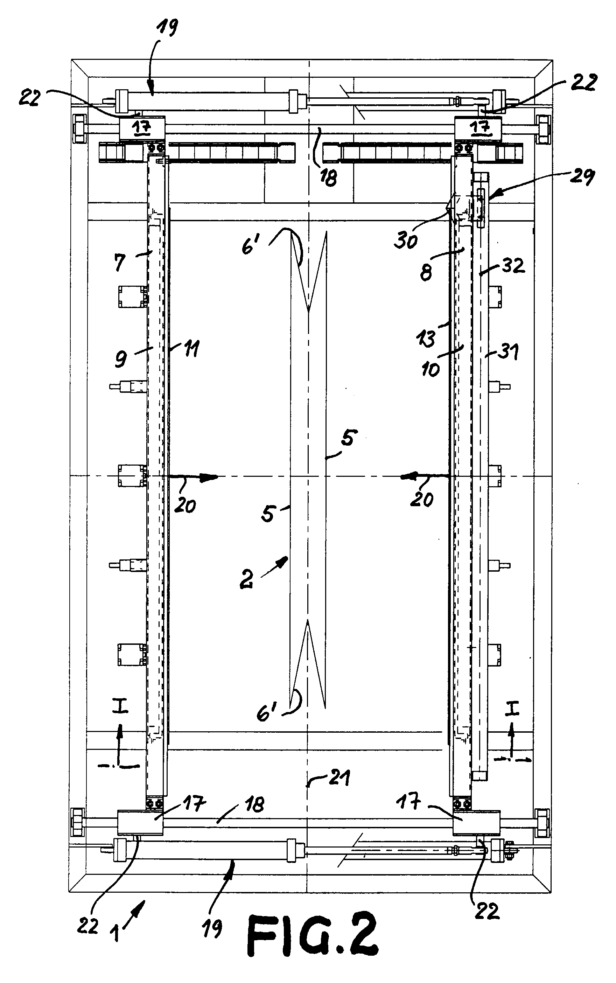

Fig. 1 zeigt eine stark schematisierte, teilweise Seitenansicht auf die für die vorliegende Erfindung wesentlichen Komponenten einer im ganzen mit 1 bezeichneten Haubenbildungseinrichtung, die in eine Verpackungsmaschine zum jeweiligen Umhüllen von Stückgutstapeln mit einer Folienhaube integriert ist. Von der Verpackungsmaschine sind lediglich einige oberhalb der Einrichtung 1 angeordnete Komponenten angedeutet. Dabei läuft ein aus Kunst-stoffolie bestehender Seitenfaltenschlauch 2 von einer nicht dargestellten Vorratsrolle zunächst noch im flach zusammengefalteten Zustand horizontal zu einer Umlenkrolle 3, von welcher er so umgelenkt wird, daß er danach vertikal nach unten verläuft, wird von ortsfest an der Verpackungsmaschine angeordneten Keilblechen 4, welche in die Seitenfalten greifen, leicht aufgespreizt, wie dieses aus Fig. 2 erkennbar ist, und verläuft in diesem Zustand mit zwei nach wie vor parallel zueinander verlaufenden Wandungsabschnitten 5 und den dazwischenliegenden, leicht geöffneten Seitenfalten 6 durch die Einrichtung 1 hindurch. An seinem nicht dargestellten unteren Ende wird der Schlauch von nicht dargestellten Elementen aufgenommen, welche ihn dort zu gegebener Zeit völlig öffnen, im Falle von Stretchfolienmaterial - im allgemeinen auf diese Elemente aufgerefft - auf das zum Überziehen der in der Einrichtung 1 gebildeten Haube erforderliche Überziehmaß dehnen und die Haube über den zu umhüllenden Stückgutstapel ziehen. Da dieses in der Fachwelt hinlänglich bekannt und für die vorliegende Erfindung unerheblich ist, ist auf eine Darstellung und weitere Beschreibung dieser und weiterer Elemente der Verpackungsmaschine verzichtet worden. Es sei lediglich noch darauf verwiesen, daß in Fig. 1 von der Verpackungsmaschine noch zwischen den Keilblechen 4 und der Einrichtung 1 angeordnete Greifer 6 angedeutet sind, welche den von den Keilblechen 4 leicht geöffneten Seitenfaltenschlauch 2 an dessen äußeren Längsrändern punktuell ergreifen.

Die Einrichtung 1 weist zwei rechtwinklig zur Schlauchlängsrichtung angeordnete, beheizbare Schweißleisten 7 und 8 auf, die parallel zu den parallelen Wandungsabschnitten 5 des Seitenfaltenschlauches 2 angeordnet sind und zusammen eine Schweißeinrichtung bilden, mittels welcher der Schlauch 2 mit einer rechtwinklig zu seiner Längsrichtung verlaufenden Querschweißnaht zu versehen ist. Die Schweißleisten 7 bzw. 8 sind jeweils an der Innenseite eines U-förmigen Klemmrahmens 9 bzw. 10 angeordnet. Der Klemmrahmen 9 weist an seinem oberen Rand eine obere Klemmleiste 11 und an seinem unteren Rand eine untere Klemmleiste 12 auf, während der Klemmrahmen 10 an seinem oberen Rand mit einer oberen Klemmleiste 13 und an seinem unteren Rand mit einer unteren Klemmleiste 14 versehen ist. Die Klemmflächen 15 der beiden jeweils übereinander angeordneten Klemmleisten 11, 12 bzw. 13, 14 fluchten zueinander und sind in der in den Fig. 1 bis 3 dargestellten Ruhestellung der Einrichtung 1 jeweils um ein Maß a zu der nach in-nen gerichteten Kontaktfläche 16 der zugeordneten Schweißleiste 7 bzw. 8 versetzt.

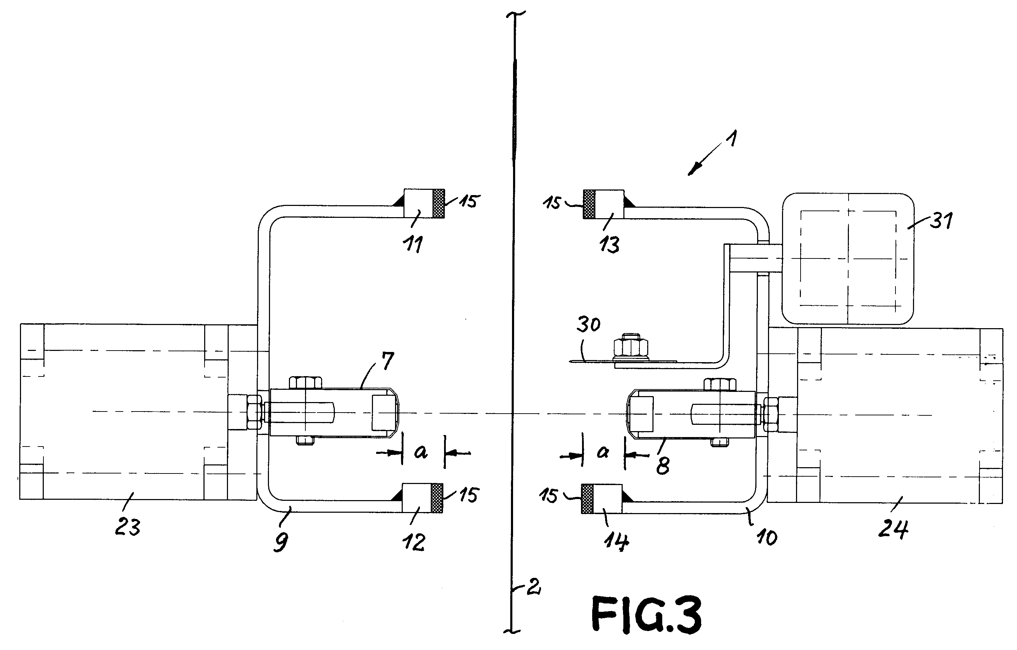

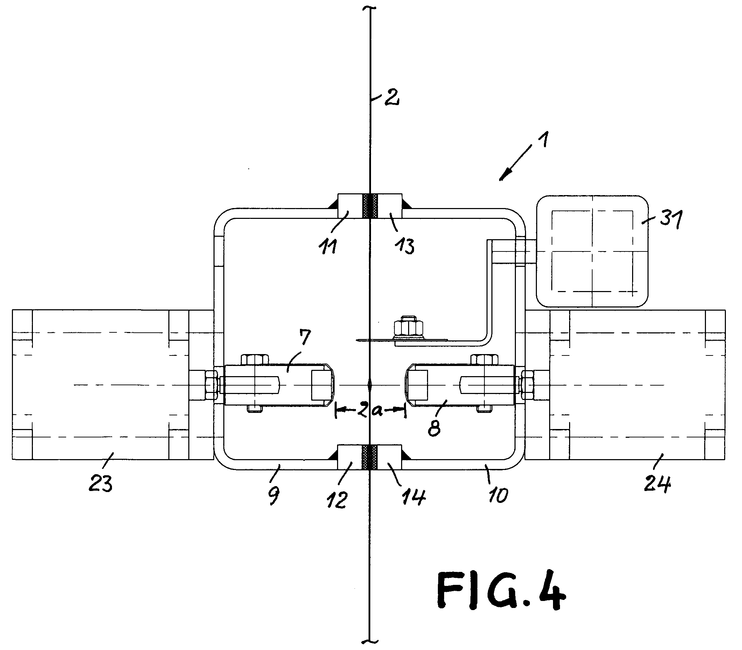

An den stirnseitigen Enden der Klemmrahmen 9 und 10 ist jeweils ein Führungsstück 17 befestigt, welches an einer Linearführung 18 geführt ist und mit einem im ganzen mit 19 bezeichneten Antrieb verbunden ist, mittels dessen die Klemmrahmen 9, 10 aus ihrer in Fig. 1 bis 3 dargestellten Ruhestellung zusammen mit den an ihnen angeordneten Schweißleisten 7, 8 in Richtung der Pfeile 20 synchron bis annähernd zur vertikalen mittleren Längsebene 21 der Einrichtung 1 zu verfahren sind. In Fig. 3 ist dieser Antrieb 19 durch Kolben-Zylinder-Einheiten symbolisiert, die jeweils mit ihrem Zylinder und ihrer Kolbenstange über ein Verbindungsstück 22 mit einem Führungsstück 17 verbunden sind. Auf die konkrete Ausbildung dieser Antriebe 19 kommt es indes nicht an. Wesentlich ist allein, daß der Antrieb 19 in der Lage ist, die Klemmrahmen 9 und 10 aus ihrer Ruhestellung in eine Klemmstellung (und wieder zurück in die Ruhestellung) zu verfahren (s. Fig. 4), in welcher die eine obere Klemmeinrichtung bildenden oberen Klemmleisten 11, 13 und die eine untere Klemmeinrichtung bildenden unteren Klemmleisten 12, 14 den Schlauch 2 fest einklemmen.Dabei weisen die beiden Schweißleisten 7, 8 bei Erreichen dieser Klemmstellung noch einen gegenseitigen Abstand 2a zueinander auf.

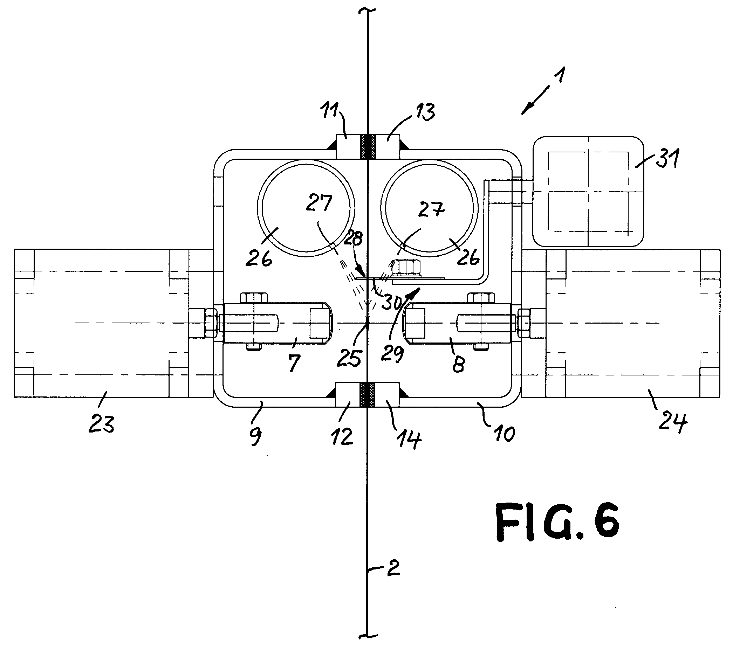

Obwohl die Schweißleisten 7, 8 gemeinsam mit den Klemmrahmen 9, 10 verfahrbar sind, weisen sie jeweils einen gesonderten, eigenen Antrieb 23 bzw. 24 auf, mittels dessen sie jeweils relativ zu ihrem Klemmrahmen 9 bzw. 10 aufeinander zu zu verfahren sind, bis sie sich unter Einklemmen des Schlauches 2 jeweils an einen parallel zu ihnen verlaufenden Wandungsabschnitt 5 des Schlauches 2 angelegt haben und diesen zwischen sich einklemmen. Dabei sind die beheizbaren Schweißelemente 7' bzw. 8' bereits auf die erforderliche Schweißtemperatur von ca. 140°C aufgeheizt, so daß die Schweißleisten 7, 8 nur über einen Zeitraum von ca. 0,8 s. in klemmendem Eingriff mit dem Schlauch 2 zu verbleiben brauchen, um die Querschweißnaht 25 zu bilden, und danach sogleich mittels der Antriebe 23 und 24 wieder an die Klemmrahmen 9 bzw. 10 zurückgefahren werden (s. Fig. 6), so daß die bei ihrer Bildung zähflüssige, teigige Schweißnaht 25 bereits nach weniger als 1 s. freiliegt und rasch abkühlen kann. Dieses wird durch in Fig. 6 angedeutete Kühleinrichtungen 26 unterstützt, die innerhalb der Klemmrahmen 9 bzw. 10 angeordnet und jeweils an eine Druckluftquelle angeschlossen sind. Die Kühleinrichtungen 26 weisen jeweils Düsen 27 auf, durch welche die Querschweißnaht 25 an ihren beiden Außenseiten gesteuert mit Kühlluft anzublasen ist, sobald sich die Schweißleisten 7, 8 von ihr entfernt haben.

Sobald die Querschweißnaht 25 so weit abgekühlt ist, daß sie sich wieder verfestigt hat, wird der mit der Querschweißnaht 25 versehene Schlauchabschnitt an einer zwischen der oberen Klemmeinrichtung 11, 13 und der Schweißeinrichtung 7, 8 angeordneten Abtrennlinie 28 von einer im ganzen mit 29 bezeichneten Schneideinrichtung von dem Schlauchvorrat abgetrennt.

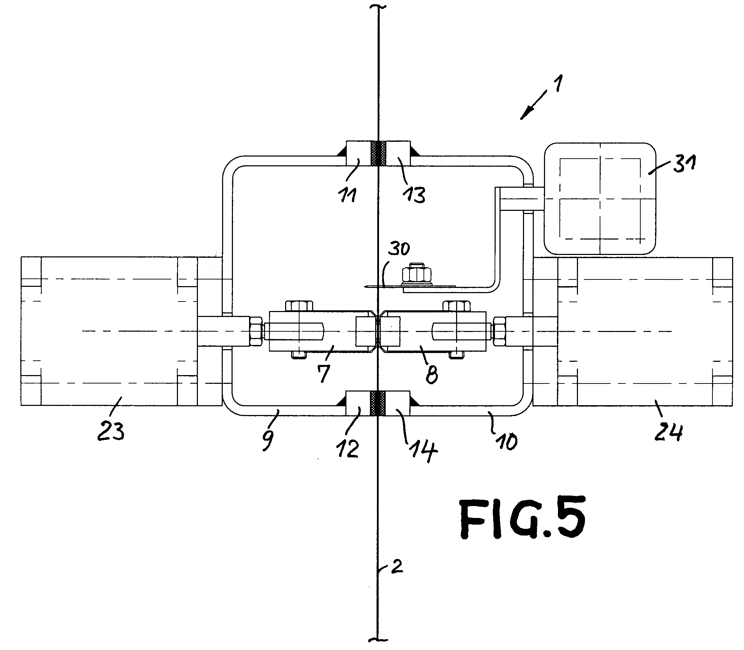

Hierfür besitzt die Schneideinrichtung 29 ein Messer 30 (s. Fig. 2), welches beim Öffnen und Schließen der Einrichtung 1 außerhalb des Schlauchbereiches angeordnet ist und mittels eines nicht im einzelnen dargestellten Antriebes längs einer Messerführung 31 beweglich ist. Bei dem Antrieb kann es sich beispielsweise um ei-nen Kettenantrieb handeln, dessen Kette 32 in Fig. 2 mit einer strichpunktierten Linie angedeutet ist. Dabei verfährt das Messer 30 in seiner inneren Stellung gem. den Fig. 4 bis 6 und trennt dabei unter Bildung einer Haube den mit der Querschweißnaht 25 versehenen un-teren Schlauchabschnitt benachbart zu der Querschweißnaht 25 kurz oberhalb der Querschweißnaht von dem Schlauchvorrat ab.

Nach dem Öffnen der Einrichtung 25 kann die auf diese Weise gebildete Folienhaube von der Verpackungsmaschine weiter verarbeitet und über den zu umhüllenden Stückgutstapel gezogen werden, während von dem Schlauchvorrat bereits wieder ein Schlauchabschnitt gesteuert abgerollt und so weit durch die Einrichtung 1 nach unten geführt wird, daß er nach erfolgter Schweißnahtbildung die gewünschte Haubenlänge aufweist.

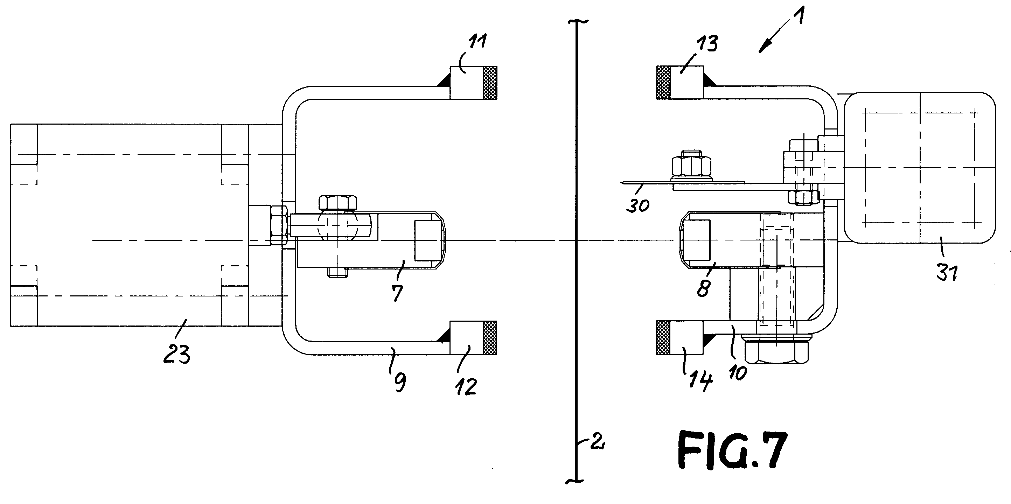

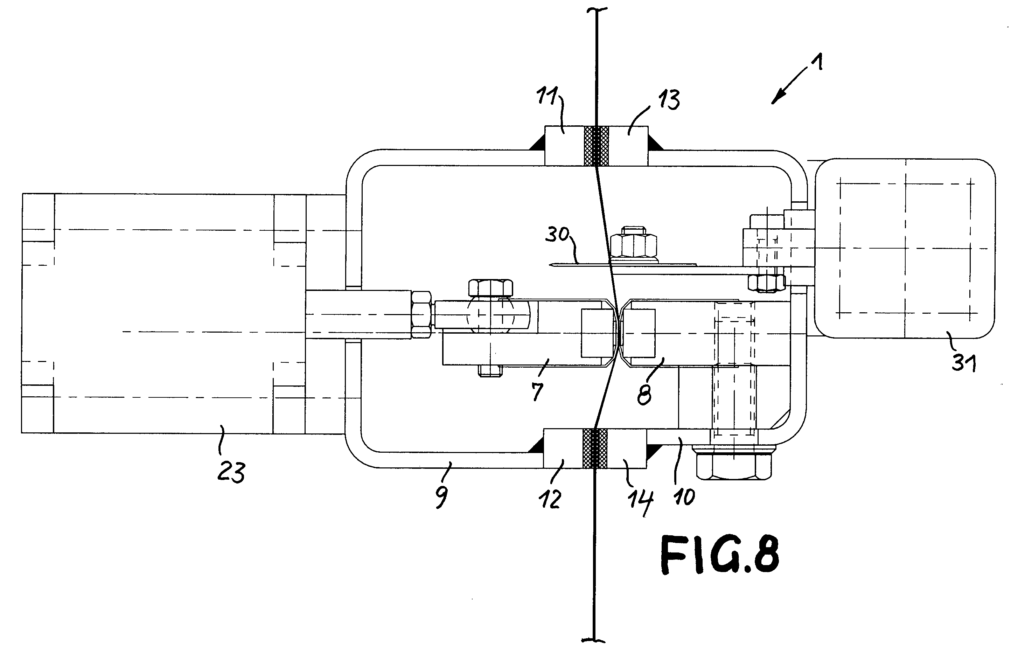

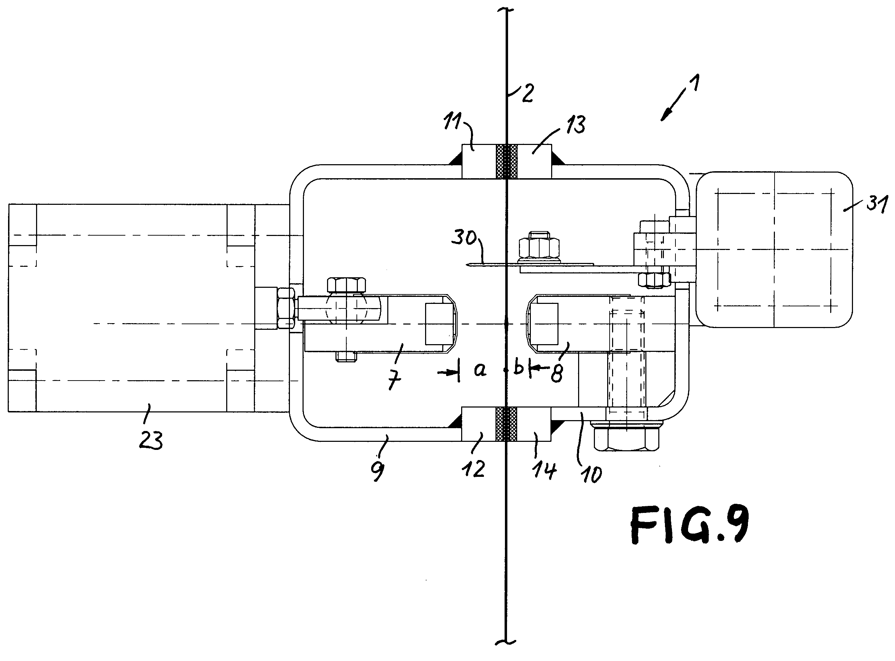

Die Fig. 7 bis 9 zeigen eine Variante der Haubenbildungseinrichtung 1, die sich von der zuvor beschriebenen Ausbildung lediglich dadurch unterscheidet, daß nur die eine Schweißleiste 7 mit einem Antrieb 23 versehen ist, mittels dessen sie relativ zu dem Klemmrahmen 9 beweglich ist, während die andere Schweißleiste 8 fest an dem ihr zugeordneten Klemmrahmen 10 angeordnet ist. Auch bei dieser Ausgestaltung werden zunächst die beiden Klemmrahmen 9, 10 aus ihrer Ruhestellung (s. Fig. 7) so zusammengefahren, daß die obere Klemmeinrichtung 11, 13 und die untere Klemmeinrichtung 12, 14 den Schlauch fest einklemmen, ohne daß die Schweißleiste 7 da-bei zunächst relativ zu dem Klemmrahmen 9 bewegt wird. In dieser Klemmstellung steht die Schweißleiste 7 in einem Abstand a und die Schweißleiste 8 in einem (kleinerem) Abstand b zu dem eingeklemmten Schlauch 2, wie dieses aus Fig. 9 entnehmbar ist. Aus dieser Stellung wird sodann die antreibbare Schweißleiste 7 an den Schlauch 2 herangefahren und drückt diesen gegen die Kontaktfläche 16 der anderen Schweißleiste 8 (s. Fig. 8), wobei der zwischen den Klemmeinrichtungen 11, 13 und 12, 14 eingeklemmte Schlauchabschnitt geringfügig zur Schweißleiste 8 hin verformt wird. Sobald die Querschweißnaht 25 gebildet ist, wird die Schweißleiste 7 relativ zu dem Klemmrahmen 9 wiederum in ihre Ausgangsstellung zurückgefahren (s. Fig. 9), wobei sich der eingespannte Schlauchabschnitt im wesentlichen in seine Ausgangsstellung zurückbewegt. Dabei darf die Auslenkung b des Schlauches 2 nicht zu groß sein, weil sich anderenfalls im Schlauch 2 Zugkräfte aufbauen, welche die Querschweißnaht 25 in ihrem erhitzten, teigigen Zustand negativ beeinflussen können. Der Vorteil dieser Ausgestaltung liegt ersichtlich in dem geringeren Aufwand, da auf einen gesonderten Antrieb für die Schweißleiste 8 verzichtet werden kann. Regelmäßig wird man den hierfür erforderlichen Aufwand jedoch in Kauf nehmen, da eine Ausgestaltung, bei welcher beide Schweißleisten 7, 8 jeweils relativ zu dem ihnen jeweils zugeordneten Klemmrahmen 9 bzw. 10 beweglich sind, für die Schweißnaht vorteilhafter ist, weil sie in einem praktisch spannungsfreien Bereich des Schlauches gelegt werden kann.

Aufgrund der relativen Beweglichkeit der Schweißleiste(n) 7 und 8 bzw. 7 zum Klemmrahmen 9, 10 bzw. 9 ergibt sich in jedem Falle gegenüber dem Stand der Technik der erhebliche Vorteil, daß die Querschweißnaht 25 unverzüglich nach ihrer Bildung freigelegt, d.h. also mit den Schweißleisten 7, 8 außer Eingriff gebracht werden und - ggfs. unterstützt durch eine zusätzliche Kühlung - rasch in ihren verfestigten Zustand abkühlen kann, so daß das Abtrennen des mit der Querschweißnaht 25 versehenen Schlauchabschnittes entsprechend schneller erfolgen und der Durchsatz demgemäß entsprechend gesteigert werden kann, wie dieses primäres Ziel der vorliegenden Erfindung ist. Dieses ist deshalb möglich, weil der Schlauch 2 nur kurzzeitig von Schweißleisten 7, 8 eingeklemmt wird und die dabei gebildete Schweißnaht 25 danach im nicht mehr eingespannten Zustand erheblich rascher abkühlen kann, so daß das Abtrennen entsprechend früher und trotz der dabei in Fortfall gekommenen Abklemmung im Schweißnahtbereich optimal durchführbar ist, da der Schlauch stattdessen von der unteren Klemmeinrichtung 12, 14 eingeklemmt ist und beiderseits der Abtrennlinie 28 fixiert bleibt.

### Bezugszeichenliste

- 1: (Haubenbildungs-)Einrichtung
- 2: Seitenfaltenschlauch
- 3: Umlenkrolle
- 4: Keilbleche
- 5: parallele Wandungsabschnitte (von 2)
- 6: Greifer
- 6': Seitenfalten
- 7: Schweißleiste
- 7': Schweißelement (von 7)
- 8: Schweißleist
- 8': Schweißelement (von 8)
- 9: Klemmrahmen
- 10: Klemmrahmen
- 11: obere Klemmleiste (von 9)
- 12: untere Klemmleiste (von 9)
- 13: obere Klemmleiste (von 10)
- 14: untere Klemmleiste (von 10)
- 15: Klemmflächen (von 11-14)
- 16: Kontaktflächen (von 7,8)
- 17: Führungsstück
- 18: Linearführung (für 17)
- 19: Antrieb (für 9,10)
- 20: Pfeile
- 21: mittlere Längsebene (von 1)
- 22: Verbindungsstück
- 23: Antrieb (für 7)
- 24: Antrieb (für 8)
- 25: Querschweißnaht
- 26: Kühleinrichtungen
- 27: Düsen (von 26)
- 28: Abtrennlinie
- 29: Schneideinrichtung
- 30: Messer (von 29)
- 31: Messerführung
- 32: Kette

## Patentansprüche

1. Verfahren zum Herstellen von Hauben aus einem aus Kunststoffolie bestehenden Schlauch, insbesondere einem Seitenfaltenschlauch, zur Weiterverwendung in einer Verpackungsmaschine, bei dem der im wesentlichen vertikal angeordnete Schlauch mit Abstand zu seinem freien Ende mit einer Querschweißnaht versehen und der mit der Querschweißnaht versehene Abschnitt benachbart zu der Querschweißnaht von dem Schlauch abgetrennt wird, wobei der beim Schweißvorgang an der Schweißstelle eingeklemmte Schlauch vor dem Schweißen bis nach dem Abtrennen außerdem oberhalb und benachbart zu der Abtrennlinie über seine Breite eingeklemmt wird, dadurch gekennzeichnet, daß der Schlauch (2) vor dem Schweißen bis nach dem Abtrennen zusätzlich unterhalb und benachbart zu der Schweißstelle (25) über seine Breite eingeklemmt wird.

2. Verfahren nach Anspruch 1, dadurch gekennzeichnet, daß das Einklemmen des Schlauches (2) an der Schweißstelle nach Bildung der Querschweißnaht (25) unverzüglich aufgehoben wird, wobei der Schlauch (2) ober- und unterhalb der Querschweißnaht (25) noch so lange eingeklemmt bleibt, bis sich die Querschweißnaht (25) verfestigt hat und der mit der Querschweißnaht (25) versehene Schlauchabschnitt abgetrennt worden ist.

3. Verfahren nach Anspruch 2, dadurch gekennzeichnet, daß die Querschweißnaht (25) nach ihrer Bildung gekühlt wird.

4. Verfahren nach Anspruch 3, dadurch gekennzeichnet, daß die Querschweißnaht (25) an ihren beiden Außenseiten gekühlt wird.

5. Verfahren nach Anspruch 3 oder 4, dadurch gekennzeichnet, daß die Querschweißnaht (25) mit Luft angeblasen wird.

6. Einrichtung zur Herstellung von Hauben aus einem aus Kunststoffolie bestehenden, mit zwei im wesentlichen parallel zueinander verlaufenden Wandungsabschnitten vertikal durch die Einrichtung geführten Schlauch, insbesondere einem Seitenfaltenschlauch, für eine Verpackungsmaschine zum jeweiligen Umhüllen eines Stückgutstapels mit einer Folienhaube, mit einer zwei parallele Schweißleisten aufweisenden, beheizbaren Schweißeinrichtung, deren in einer Ruhestellung mit gegenseitigem Abstand angeordnete Schweißleisten in eine Anlagestellung verfahrbar sind, einer oberhalb der Schweißeinrichtung angeordneten Schneideinrichtung, mittels welcher ein mit einer Querschweißnaht versehener Schlauchabschnitt benachbart zu der Querschweißnaht von dem Schlauch abzutrennen ist, und einer oberhalb der Schneideinrichtung angeordneten Klemmeinrichtung, mittels welcher der Schlauch benachbart zu der Abtrennlinie im wesentlichen über seine Breite einzuklemmen ist, zur Durchführung des Verfahrens nach einem oder mehreren der vorhergehenden Ansprüche, dadurch gekennzeichnet, daß unterhalb und benachbart zu den Schweißleisten (7, 8) eine zweite Klemmeinrichtung (12, 14) angeordnet ist, mittels welcher der Schlauch (2) im wesentlichen über seine Breite zusätzlich einzuklemmen ist.

7. Einrichtung nach Anspruch 6, dadurch gekennzeichnet, daß die jeweils auf einer Schlauchseite angeordneten Klemmittel (11, 12 bzw. 13, 14) der beiden Klemmeinrichtungen (11, 13; 12, 14) miteinander verbunden und mittels eines gemeinsamen Antriebes (19) zwischen ihrer Ruhestellung und ihrer am Schlauch (2) anliegenden Klemmstellung verfahrbar sind.

8. Einrichtung nach Anspruch 6 oder 7, dadurch gekennzeichnet, daß die beiden Klemmeinrichtungen (11, 13 bzw. 12, 14) in Richtung ihrer Öffnungs- bzw. Schließbewegung relativ zu den Schweißleisten (7, 8) beweglich und unabhängig von diesen antreibbar sind.

9. Einrichtung nach Anspruch 8, dadurch gekennzeichnet, daß die beiden Klemmeinrichtungen (11, 13; 12, 14) so gesteuert sind, daß sie den Schlauch (2) bei ihrem Zusammenfahren bereits einklemmen bevor die Schweißleisten (7, 8) mit dem Schlauch (2) in Eingriff kommen.

10. Einrichtung nach Anspruch 9, dadurch gekennzeichnet, daß die Schweißleisten (7, 8) so gesteuert sind, daß sie nach dem Bilden der Querschweißnaht (25) unverzüglich in ihre Ruhestellung zurückfahren, und daß die Klemmeinrichtungen (11, 13; 12, 14) so gesteuert sind, daß sie nach dem Bilden der Querschweißnaht (25) bis nach dem Abtrennen in ihrer Klemmstellung verbleiben.

11. Einrichtung nach einem oder mehreren der Ansprüche 6 bis 10, dadurch gekennzeichnet, daß die Schweißleisten (7, 8) in ihrer Ruhestellung auf eine Ruhetemperatur erwärmt sind, die ermöglicht, daß sie die Schweißtemperatur bereits erreicht haben, wenn sie mit dem Schlauch (2) in Eingriff kommen.

12. Einrichtung nach einem oder mehreren der Ansprüche 6 bis 11, dadurch gekennzeichnet, daß die Klemmflächen (15) der beiden Klemmeinrichtungen (11, 13; 12, 14) im zusammengefahrenen Klemmzustand zueinander fluchten.

13. Einrichtung nach einem oder mehreren der Ansprüche 6 bis 12, dadurch gekennzeichnet, daß die Kontaktflächen (16) der Schweißleisten (7, 8) in deren zusammengefahrenem Anlagezustand zu den Klemmflächen (15) der Klemmeinrichtungen (11, 13; 12, 14) fluchten.

14. Einrichtung nach einem oder mehreren der Ansprüche 6 bis 12, dadurch gekennzeichnet, daß die Kontaktflächen (16) der Schweißleisten (7, 8) in deren zusammengefahrenem Anlagezustand zu den Kontaktflächen (16) der Klemmeinrichtungen (11, 13; 12, 14) seitlich versetzt sind.

15. Einrichtung nach einem oder mehreren der Ansprüche 6 bis 14, dadurch gekennzeichnet, daß nur eine Schweißleiste (7) mit einem eigenen Antrieb (23) versehen ist.

16. Einrichtung nach einem oder mehreren der Ansprüche 6 bis 15, dadurch gekennzeichnet, daß eine Kühleinrichtung (26) vorgesehen ist, mittels welcher die Querschweißnaht (25) nach dem Öffnen der Schweißeinrichtung (7, 8) mit einem Kühlmittel zu beaufschlagen ist.

17. Einrichtung nach Anspruch 16, dadurch gekennzeichnet, daß die Kühleirrichtung (26) so ausgebildet ist, daß die Querschweißnaht (25) an ihren beiden Außenseiten mit Kühlmittel zu beaufschlagen ist.

18. Einrichtung nach Anspruch 16 oder 17, dadurch gekennzeichnet, daß die Kühleinrichtung (26) mit einer Druckluftquelle verbunden ist und Austrittsöffnungen (27) aufweist, aus denen die Querschweißnaht (25) gesteuert anzublasen ist, wenn sich die Schweißleisten (7, 8) von ihr entfernt haben.
